# DEMANDE DE BREVET EUROPEEN

(11) **EP 4 311 051 A1**
(43) Date de publication de la demande: **24.01.2024**
(21) Numéro de dépôt: 23179234.2
(22) Date de dépôt: 14.06.2023
(51) Int. Cl.: H02G 7/12, H02G 7/14, H02G 7/05, H02G 1/04

(54) **DISPOSITIF DE SERRAGE POUR FIXER UNE ENTRETOISE À UN CONDUCTEUR LONGILIGNE ET ENTRETOISE COMPRENANT PLUSIEURS UNITÉS D'UN TEL DISPOSITIF DE SERRAGE**

(30) Priorité: 22.07.2022 FR 2207572
(71) Demandeur: Dervaux, 42500 Le Chambon-Feugerolles (FR)
(72) Inventeur: TOURIER, Bruno, 43240 Saint-Just-Malmont (FR); BROCARD, Jérôme, 43140 Saint-Victor-Malescours (FR); LACORNE, Cyril, 42100 Saint-Étienne (FR)
(74) Mandataire: Germain Maureau

(57) **Abrégé**

L'invention concerne un dispositif de serrage pour fixer un conducteur longiligne à une entretoise, le dispositif de serrage (101) comprenant : un support (110) comprenant un organe de liaison (120) à une entretoise, une première mâchoire (131) solidaire du support, une seconde mâchoire (132) liée au support par une liaison pivotante autour d'un premier axe (137), un levier (134) lié au support par une liaison pivotante autour d'un second axe (138), une bielle (135) liée au levier et à la seconde mâchoire respectivement par des liaisons pivotantes autour de troisième et quatrième axes (136, 139), la bielle formant une liaison à genouillère entre le levier et la seconde mâchoire, afin que la second mâchoire soit mobile par rapport au support entre : une position ouverte dans laquelle le conducteur longiligne peut être inséré entre les deux mâchoires, et une position fermée dans laquelle la seconde mâchoire se trouve bloquée.

## Description

### Domaine technique

La présente invention concerne un dispositif de serrage pour fixer une entretoise à un conducteur longiligne, ainsi qu'une entretoise comprenant plusieurs unités d'un tel dispositif de serrage. Une telle entretoise associée à plusieurs dispositifs de serrage peut être utilisée pour maintenir écartés des câbles électriques aériens sous haute tension, notamment supérieure à 60 kV.

### Etat de la technique

La demande de brevet FR 2 961 032 décrit un dispositif de serrage comportant :
- un support de forme allongée comprenant à une extrémité des moyens de liaison pour se fixer au corps d'une entretoise,
- une première mâchoire solidaire du support,
- une seconde mâchoire mobile, liée à la première mâchoire par une liaison pivotante, et
- un levier excentrique lié à la seconde mâchoire par une liaison pivotante, et lié au support par une liaison pivotante amovible.

Les liaisons du levier au support et à la seconde mâchoire sont configurées pour que la seconde mâchoire soit mobile entre une position ouverte dans laquelle un câble électrique peut être inséré entre les mâchoires, et une position fermée dans laquelle les mâchoires sont bloquées par un effet de genouillère et assurent le maintien d'un câble électrique disposé entre les mâchoires sans l'endommager.

Il en résulte que l'axe de la liaison pivotante entre le levier et la seconde mâchoire se trouve dans une position extrême par rapport à la liaison du dispositif de serrage à l'entretoise, et le passage du câble entre les deux mâchoires. Il s'avère que cette position de l'axe de la liaison pivotante entre le levier et la seconde mâchoire, n'est pas appropriée. En effet, en dehors d'un volume délimité par des câbles électriques fixés à l'entretoise, les éléments électriquement conducteurs situés à proximité des câbles électriques peuvent être le siège d'accumulation de champ ou de charges électriques, lorsque ces câbles sont soumis à de hautes ou très hautes tensions, par exemple supérieures à 60 kV. De telles accumulations doivent être évitées afin de ne pas ioniser l'air environnant, par effet couronne, et donc afin de ne pas générer des effluves, des perturbations radioélectriques et des pertes électriques et magnétiques.

Il est donc souhaitable de proposer un dispositif de serrage à la fois qui soit efficace pour maintenir et serrer un câble électrique, et dont les mâchoires de serrage d'un câble électrique sont disposées à une extrémité du dispositif de serrage. Il peut être également souhaitable que le dispositif de serrage ne présente pas de zones d'accumulation de charges électriques ou de zones de concentration de champ électrique, telles que des nervures, des arêtes vives etc.

### Résumé de l'invention

Des modes de réalisation concernent un dispositif de serrage pour fixer un conducteur longiligne à une entretoise, le dispositif de serrage comprenant : un support comprenant un organe de liaison à une entretoise, une première mâchoire liée au support, une seconde mâchoire liée au support par une liaison pivotante autour d'un premier axe, un levier lié au support par une liaison pivotante autour d'un second axe, une bielle liée au levier par une liaison pivotante autour d'un troisième axe et liée à la seconde mâchoire par une liaison pivotante autour d'un quatrième axe, le support, la première mâchoire, la seconde mâchoire, le levier et la bielle étant agencés de manière à former une liaison à genouillère entre le levier et la seconde mâchoire, afin que la second mâchoire soit mobile par rapport au support entre : une position ouverte dans laquelle le conducteur longiligne peut être inséré entre la première mâchoire et la seconde mâchoire, et une position fermée dans laquelle la seconde mâchoire se trouve bloquée, et coopère avec la première mâchoire pour serrer un conducteur longiligne.

Grâce à ces dispositions, aucun élément n'est disposé en dehors du support au-delà de la première mâchoire. En effet, l'articulation permettant la rotation de la seconde mâchoire qui est mobile par rapport à la première mâchoire fixe, et le système de verrouillage par genouillère sont compris entre l'organe de liaison et le conducteur maintenu entre les deux mâchoires. Ainsi, aucun élément ne se trouve en dehors d'un volume délimité par des câbles électriques fixés à l'entretoise à laquelle le dispositif de serrage peut être fixé. De cette manière, on évite les accumulations de champ ou de charges électriques.

Selon un mode de réalisation, le support forme une cavité dans laquelle sont logés la bielle et des extrémités maintenues par des liaisons pivotantes du levier et de la seconde mâchoire.

Ainsi, les éléments présentant des arêtes vives sont logés dans une cavité et donc ne sont pas susceptibles d'être le siège d'accumulations de champ et de charges électriques.

Selon un mode de réalisation, le levier présente une extrémité libre se rapprochant du premier axe et de la seconde mâchoire durant le passage de la position ouverte à la position fermée.

Ainsi, le dispositif de serrage présente en position fermée une forme compacte limitant les accumulations de champs et de charges électriques.

Selon un mode de réalisation, le support, la première mâchoire, la seconde mâchoire et le levier sont réalisés de manière à ne présenter que des surfaces externes qui sont convexes courbes.

De cette manière, one évite que les seules surfaces susceptibles d'accumuler des champs et des charges électriques puissent être le siège de telles accumulations.

Selon un mode de réalisation, les premier, second, troisième et quatrième axes sont disposés sur le support entre la première mâchoire et l'organe de liaison.

Cette disposition implique qu'aucun élément ne soit disposé en dehors du support au-delà de la première mâchoire.

Selon un mode de réalisation, l'organe de liaison présente la forme d'un disque, dans lequel est ménagé un orifice axial débouchant prévu pour recevoir un axe de liaison d'un organe de fixation d'une entretoise.

Des modes de réalisation peuvent également concerner une entretoise pour maintenir distants au moins deux conducteurs longilignes, l'entretoise comprenant un corps comportant des moyens de fixation pour être fixée à au moins deux dispositifs de serrage tels que définis précédemment, le support de chacun des dispositifs de serrage étant lié au corps de l'entretoise par l'intermédiaire des moyens de liaison du dispositif de serrage.

Selon un mode de réalisation, l'entretoise comprend des moyens de fixation pour être fixée à trois organes de serrage tels que définis précédemment, le corps étant globalement en forme de triangle.

Selon un mode de réalisation, l'entretoise comprend des moyens de fixation pour être fixée à quatre organes de serrage tels que définis précédemment, le corps étant globalement en forme de carré ou de rectangle.

Des modes de réalisation peuvent également concerner un dispositif pour maintenir distants au moins deux conducteurs longilignes, comprenant une entretoise telle que définie précédemment, et au moins deux dispositifs de serrage tels que définis précédemment, fixés à l'entretoise et serrant chacun un conducteur longiligne.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
[Fig 1] La figure 1 est une vue en perspective d'une entretoise associée à trois dispositifs de serrage, selon un mode de réalisation,
[Fig 2] La figure 2 est une vue en perspective de dos d'un dispositif de serrage en position ouverte, selon un mode de réalisation,
[Fig 3] La figure 3 est une vue en perspective de face du dispositif de serrage en position ouverte, selon un mode de réalisation,
[Fig 4] La figure 4 est une vue latérale en coupe du dispositif de serrage en position ouverte, selon un mode de réalisation,
[Fig 5] La figure 5 est une vue latérale du dispositif de serrage en position fermée, selon un mode de réalisation,
[Fig 6] La figure 6 est une vue éclatée en perspective du dispositif de serrage, selon un mode de réalisation,
[Fig 7] La figure 7 est une vue en perspective d'une entretoise associée à deux dispositifs de serrage, selon un mode de réalisation,
[Fig 8] La figure 8 est une vue en perspective d'une entretoise associée à quatre dispositifs de serrage, selon un mode de réalisation.

### Description détaillée

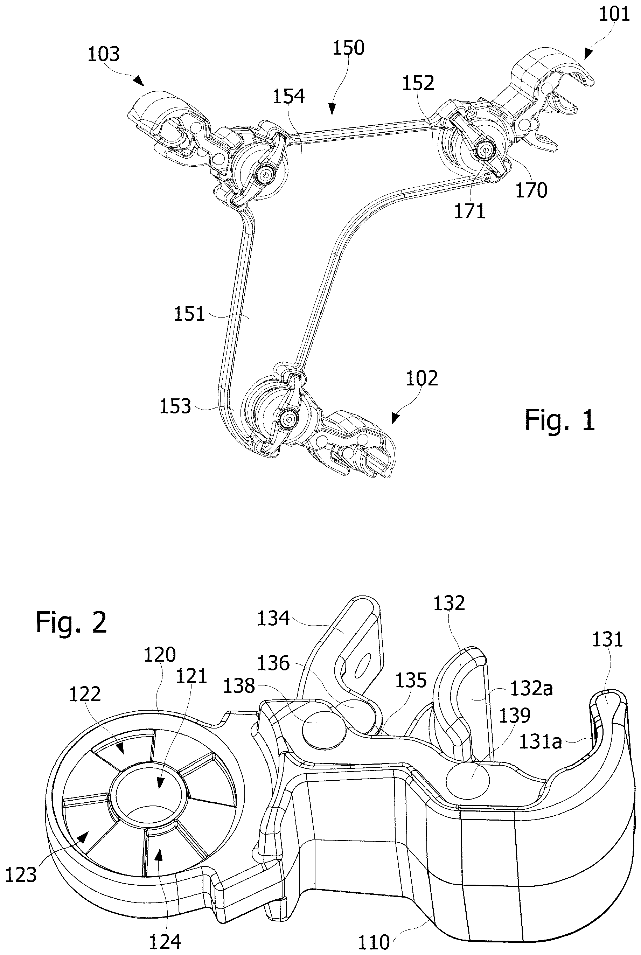

La figure 1 représente une entretoise 150 comprenant un corps 151 et trois dispositifs de serrage 101, 102 et 103 selon un mode de réalisation. Le corps 151 est globalement en forme de triangle, dont chaque sommet 152, 153, 154 est lié à un dispositif de serrage respectif 101, 102, 103. Chaque dispositif de serrage 101, 102, 103 a notamment pour fonction de fixer l'entretoise 150 à un conducteur longiligne respectif, tel qu'un câble électrique. Le câble électrique est généralement suspendu au-dessus du sol et peut être porté à haute tension. L'entretoise 150 a notamment pour fonction de maintenir distants trois conducteurs longilignes fixés respectivement par les trois dispositifs de serrage 101, 102, 103. Dans l'exemple de la figure 1, le dispositif de serrage 101 est en position ouverte, et les dispositifs de serrage 102, 103 sont en position fermée. Le dispositif de serrage 103 maintient un conducteur longiligne 1 tel qu'un câble électrique.

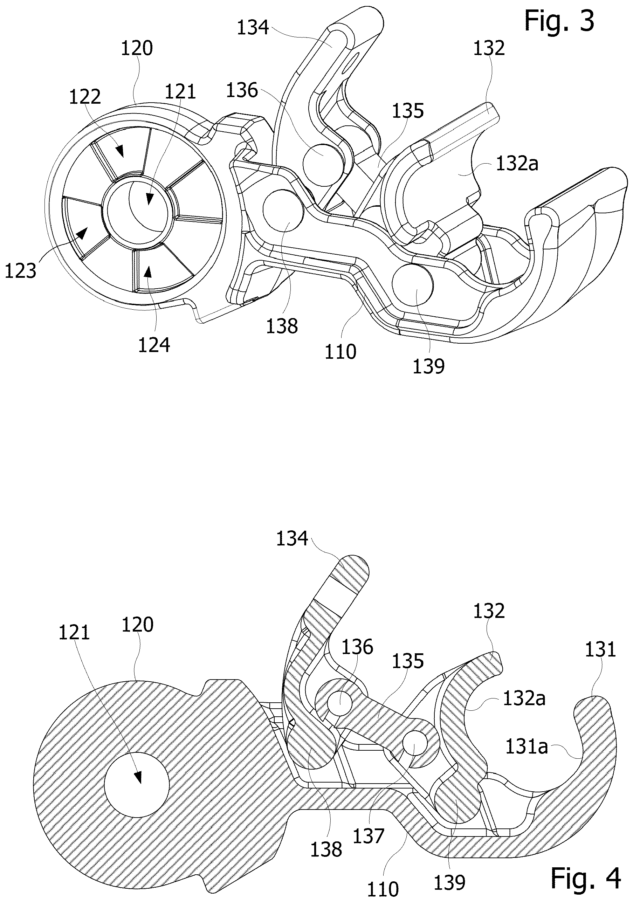

Dans la mesure où les dispositifs de serrage 102 et 103 sont semblables au dispositif de serrage 101, seul le dispositif de serrage 101 sera décrit dans ce qui suit en relation avec les figures 2 à 6. Le dispositif de serrage 101 comporte un support 110, une première mâchoire 131 qui peut être solidaire du support 110 et une seconde mâchoire 132 mobile par rapport au support 110. A l'opposé de la première mâchoire 131, le support 110 comprend également un organe de liaison 120 configuré pour fixer le dispositif de serrage 101 à une entretoise telle que l'entretoise 150. La première mâchoire 131 et la seconde mâchoire 132 sont conçues et configurées pour recevoir un conducteur longiligne tel que le câble électrique 1, et en particulier pour exercer entre elles des forces de serrage permettant de maintenir un câble électrique. A cet effet, la première mâchoire 131 et la seconde mâchoire 132 présentent chacune une surface de serrage 131a et 132a de forme semi-cylindrique de dimensions adaptées au diamètre des conducteurs longilignes à serrer.

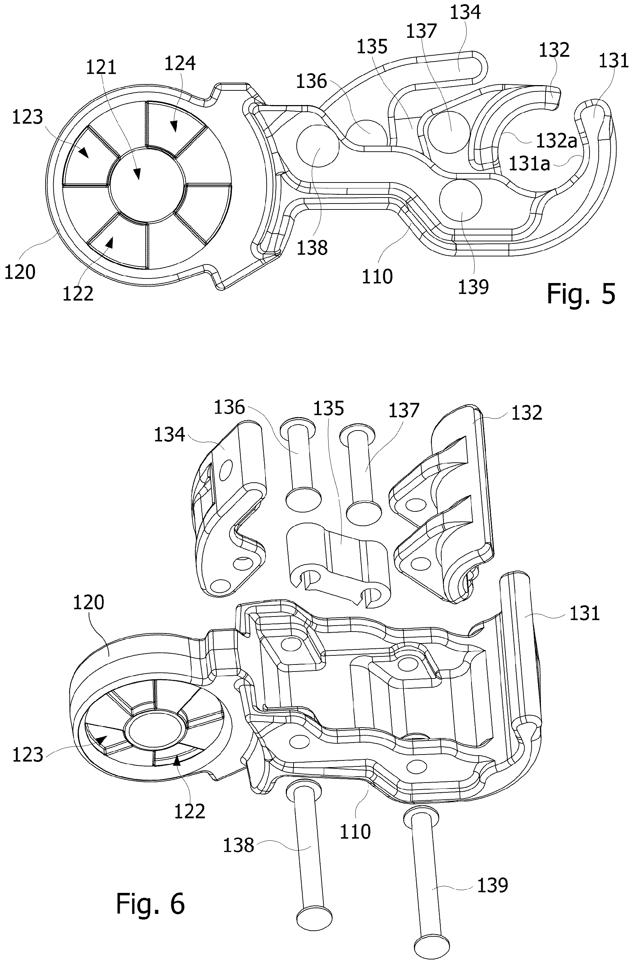

Le dispositif de serrage 101 comprend en outre un levier 134 qui est lié à la seconde mâchoire 132 par une bielle 135. La bielle 135 est liée d'une part au levier 134 par une première liaison pivotante autour d'un premier axe 136, et d'autre part, à la seconde mâchoire 132 par une seconde liaison pivotante autour d'un seconde axe 137. Le levier 134 est également lié au support 110 par une troisième liaison pivotante autour d'un troisième axe 138. Dans l'exemple des figures 2 à 6, la seconde mâchoire 132 est liée au support 110 par une quatrième liaison pivotante autour d'un quatrième axe 139. Les axes 136 à 139 sont parallèles. Le levier 134 présente globalement une section en forme de « L » dans un plan perpendiculaire aux axes 136 à 139. Dans l'exemple de la figure 6, les axes 136 à 139 sont formés par des tiges

Le levier 134, la bielle 135, la seconde mâchoire et les quatre liaisons pivotantes autour des axes 136 à 139 forment une liaison à genouillère de sorte que durant le mouvement de fermeture du dispositif de serrage 101, actionné par le levier 134, la liaison passe par une position d'équilibre instable dans laquelle les axes 138, 136 et 137 se trouvent dans un même plan, pour finir dans un état où l'extrémité libre 134a du levier 134 se trouve rapproché de l'axe 137 et de la seconde mâchoire 132, le dispositif de serrage se trouvant alors en position fermée (figure 5). Ainsi, dans la position fermée, le levier 134 ne forme pas de saillie et le dispositif de serrage présente une forme compacte. Il en résulte une réduction des accumulations de champ et de charges électriques, limitant davantage les effets couronne et d'ionisation de l'air.

Selon un exemple de réalisation, le levier 134 comporte un orifice 134a prévu pour recevoir un outil pouvant servir de levier afin de faciliter le passage de la position d'équilibre instable, notamment pour atteindre la position fermée des mâchoires 131, 132.

Sur la figure 6, le support 110 forme une cavité 111 délimitée par des bords latéraux 111a, 111b, par la première mâchoire 131 et par un bord transversal 111c disposé du côté de l'organe de liaison 120. La cavité 111 loge les axes 136 à 139, la bielle 135 et des extrémités maintenues par les axes 136 à 139 du levier 134 et de la seconde mâchoire 132. Dans l'exemple de la figure 6, les axes 136 à 139 sont formés par des tiges. En outre, chaque extrémité de chacune des tiges 136 à 139 est équipée d'un embout arrondi, c'est-à-dire en forme de calotte sphérique. Un tel embout arrondi peut être formé par la tête d'un rivet.

Lorsque le dispositif de serrage 101 est en position fermée (figure 5), les surfaces de serrage 131a, 132a respectives de la première mâchoire 131 et de la seconde mâchoire 132 définissent un volume de serrage sensiblement cylindrique qui est adapté pour recevoir et serrer un conducteur longiligne. A cet effet, la section droite d'un conducteur longiligne susceptible d'être serré présente une surface plus grande que la surface de section droite de ce volume cylindrique.

En outre, il peut être observé que la première mâchoire 131 est disposée à une extrémité du support 110 et n'est liée à aucun autre élément, et que les axes 136 à 139 sont disposés entre la première mâchoire 131 et l'organe de liaison 120 à une entretoise. Ainsi, le dispositif de serrage 101 ne comporte aucun élément situé en dehors d'un volume ou faisceau délimité par les câbles maintenus écartés par l'entretoise. Le dispositif de serrage ne comporte donc pas d'éléments susceptibles d'accumuler du champ ou des charges électriques.

Selon un mode de réalisation, le support 110, la seconde mâchoire 132 et le levier 134 sont réalisés de manière à ne présenter que des surfaces externes qui sont convexes et courbes, ayant un rayon de courbure minimal. Selon un exemple de réalisation, ce rayon de courbure peut être fixé à une valeur supérieure à 5 mm. Ainsi, le dispositif de serrage 101 présente une forme ne favorisant pas l'accumulation de champ ou de charges électriques.

Selon un mode de réalisation, l'organe de liaison 120 présente la forme d'un disque, dans lequel est ménagé un orifice axial débouchant 121. L'orifice 121 est prévu pour recevoir un axe de liaison 171 d'un organe de fixation 170, montré sur la figure 1, permettant de lier le dispositif de serrage 101 à l'entretoise 150. L'organe de liaison 120 comprend des évidements 122, 123, 124 en forme de secteurs coaxiaux autour de l'orifice 121 ayant notamment pour fonction de coopérer avec des moyens complémentaires prévus sur l'organe de fixation 170 pour limiter ou empêcher la rotation du dispositif de serrage 101 par rapport à l'entretoise 150. L'orientation de chaque dispositif de serrage 101, 102, 103 par rapport à l'entretoise 150 peut ainsi être ajustée.

Le support 110, la seconde mâchoire 132 et le levier 134 du dispositif de serrage 101 peuvent être réalisés par exemple en un alliage d'aluminium obtenu en fonderie et usinage de reprise. La bielle 135 peut être réalisée par exemple en aluminium par extrusion. Les axes 136 à 139 peuvent être formés par des rivets en acier.

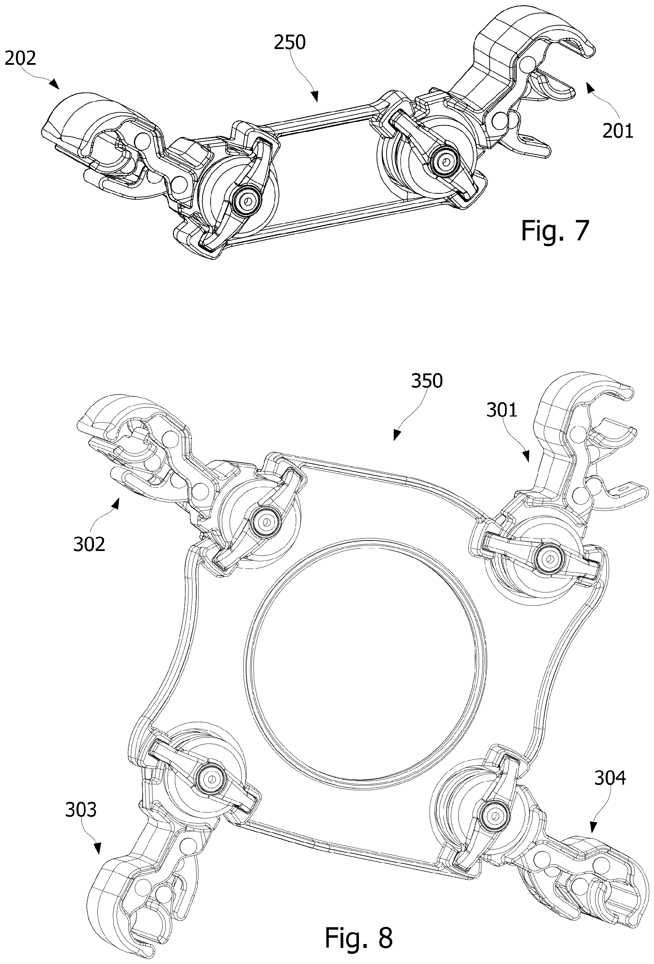

La figure 7 représente une entretoise 250 selon un autre mode de réalisation. L'entretoise 250 diffère de l'entretoise 150 en ce qu'elle supporte seulement deux dispositifs de serrage 201, 202 pouvant être identiques au dispositif de serrage 101. A cet effet, l'entretoise 250 présente une forme de barre rectiligne dont chaque extrémité est liée respectivement à l'un des dispositifs de serrage 201, 202 à l'aide de l'organe de fixation 170. Le dispositif de serrage 201 est en position ouverte, tandis que le dispositif de serrage 202 est en position fermée.

La figure 8 représente une entretoise 350 selon un autre mode de réalisation. L'entretoise 350 diffère de l'entretoise 150 en ce qu'elle supporte quatre dispositifs de serrage 301, 302, 303, 304 pouvant être identiques au dispositif de serrage 101. A cet effet, l'entretoise 250 présente une forme globalement carrée ou rectangulaire dont chaque sommet est lié respectivement à l'un des dispositifs de serrage 301, 302, 303, 304.

Il apparaîtra clairement à l'homme de l'art que la présente invention est susceptible de diverses variantes de réalisation et diverses applications. En particulier, l'invention n'est pas limitée aux formes présentées du dispositif de serrage, mais peut avoir une forme différente tout en conservant le principe du verrouillage en position fermée par une liaison à genouillère disposée sur le support. Ainsi, la première mâchoire 131 n'est pas nécessairement solidaire du support 110, mais peut être liée à ce dernier par exemple par une liaison pivotante. Les orifices recevant les axes des liaisons pivotantes 136 à 139 peuvent avoir une forme et un agencement différents de ceux illustrés par les figures.

L'invention n'est pas non plus limitée aux formes d'entretoises décrites précédemment. Ainsi, la forme de l'entretoise et les dimensions de son corps peuvent varier en fonction de la configuration du faisceau de conducteurs longilignes à maintenir distants. En particulier, l'entretoise peut être configurée pour recevoir plus de quatre dispositifs de serrage, par exemple cinq, six ou huit, de façon à maintenir distants autant de conducteurs longilignes. A cet effet, le corps de l'entretoise peut avoir une forme de polygone ou une autre forme. Les moyens de fixation entre l'entretoise et les dispositifs de serrage peuvent également avoir une forme et un agencement différents de ceux illustrés par les figures 1, 7 et 8.

## Revendications

1. Dispositif de serrage pour fixer un conducteur longiligne à une entretoise, le dispositif de serrage (101) comprenant :
un support (110) comprenant un organe de liaison (120) à une entretoise (150, 250, 350),
une première mâchoire (131) liée au support,
une seconde mâchoire (132) liée au support par une liaison pivotante autour d'un premier axe (137),
un levier (134) lié au support par une liaison pivotante autour d'un second axe (138),
une bielle (135) liée au levier par une liaison pivotante autour d'un troisième axe (136) et liée à la seconde mâchoire par une liaison pivotante autour d'un quatrième axe (139),
le support, la première mâchoire, la seconde mâchoire, le levier et la bielle étant agencés de manière à former une liaison à genouillère entre le levier et la seconde mâchoire, afin que la second mâchoire soit mobile par rapport au support entre :
une position ouverte dans laquelle le conducteur longiligne peut être inséré entre la première mâchoire et la seconde mâchoire, et
une position fermée dans laquelle la seconde mâchoire se trouve bloquée, et coopère avec la première mâchoire pour serrer un conducteur longiligne.

2. Dispositif selon la revendication 1, dans lequel le support (110) forme une cavité (111) dans laquelle sont logés la bielle (135) et des extrémités maintenues par des liaisons pivotantes du levier (134) et de la seconde mâchoire (132).

3. Dispositif selon la revendication 1 ou 2, dans lequel le levier (134) présente une extrémité libre (134a) se rapprochant du premier axe (137) et de la seconde mâchoire (132) durant le passage de la position ouverte à la position fermée.

4. Dispositif selon l'une des revendications 1 à 3, dans lequel le support (110), la première mâchoire (131), la seconde mâchoire (132) et le levier (134) sont réalisés de manière à ne présenter que des surfaces externes qui sont convexes courbes.

5. Dispositif selon l'une des revendications 1 à 4, dans laquelle les premier, second, troisième et quatrième axes sont disposés sur le support (110) entre la première mâchoire (131) et l'organe de liaison (120).

6. Dispositif selon l'une des revendications 1 à 5, dans laquelle l'organe de liaison (120) présente la forme d'un disque, dans lequel est ménagé un orifice axial débouchant (121) prévu pour recevoir un axe de liaison (171) d'un organe de fixation (170) d'une entretoise (150).

7. Entretoise pour maintenir distants au moins deux conducteurs longilignes (1), l'entretoise comprenant un corps (151) comportant des moyens de fixation (170) pour être fixée à au moins deux dispositifs de serrage selon l'une des revendications 1 à 6, le support de chacun des dispositifs de serrage étant lié au corps de l'entretoise par l'intermédiaire des moyens de liaison du dispositif de serrage.

8. Entretoise selon la revendication 7, comprenant des moyens de fixation (170) pour être fixée à trois organes de serrage (101, 102, 103) selon l'une des revendications 1 à 6, le corps (150) étant globalement en forme de triangle.

9. Entretoise selon la revendication 7, comprenant des moyens de fixation (170) pour être fixée à quatre organes de serrage (301, 302, 303, 304) selon l'une des revendications 1 à 6, le corps (350) étant globalement en forme de carré ou de rectangle.

10. Dispositif pour maintenir distants au moins deux conducteurs longilignes, comprenant une entretoise (150, 250, 350) selon l'une des revendications 7 à 9, et au moins deux dispositifs de serrage (101, 102, 103) selon l'une des revendications 1 à 6, fixés à l'entretoise et serrant chacun un conducteur longiligne (1).
